# EUROPÄISCHE PATENTSCHRIFT

(11) **EP 0 279 200 B1**
(45) Veröffentlichungstag und Bekanntmachung des Hinweises auf die Patenterteilung: **06.04.1994**
(21) Anmeldenummer: 88100805.6
(22) Anmeldetag: 20.01.1988
(51) Int. Cl.: B03C 7/00, B03B 9/06

(54) **Verfahren zum Trenen von Teilen aus elektrisch nichtleitendem Material, insbesondere Kunststoff und/oder Papier, aus Müll und Vorrichtung zur Durchführung des Verfahrens**
Process for separating electrically non-conductive parts from garbage, in particular plastic and/or paper, and device therefor
Procédé pour la séparation de parties en matériau électriquement non conducteur à partir d'ordure, en particulier de plastic et/ou papier et appareil à cet effet

(30) Priorität: 17.02.1987 DE 3705004
(43) Veröffentlichungstag der Anmeldung: 24.08.1988
(73) Patentinhaber: ORGAN-FASER TECHNOLOGY COMPANY N.V., Curaçao (AN)
(72) Erfinder: Frei, Josef, CH-5422 Oberehrendingen (CH)
(74) Vertreter: Körber, Wolfhart, Dr.rer.nat.

(56) Entgegenhaltungen:
- DE-A- 3 227 874
- DE-B- 1 218 371
- DE-B- 1 229 022
- DE-C- 275 113
- DE-C- 281 735

## Beschreibung

Die Erfindung bezieht sich auf ein Verfahren und auf eine Vorrichtung nach den Oberbegriffen der Ansprüche 1 bzw. 7.

Es ist bekannt, durch verschiedene Verfahren Müll bzw. Abfälle aus Haushalt, Gewerbe und auch Industrie in mehrere Fraktionen zu sortieren und zu wieder verwertbaren Roh- oder Grundmaterialien aufzubereiten.

Gemäß dem DE-Patent 31 05 597 und den deutschen Patentanmeldungen P 36 14 324.3 und P 36 14 325.1 der Anmelderin wird der Müll in jeweils drei Hauptfraktionen aufgeteilt, wie
Eisenmetalle
granulierte Schwerstoffe (Schwerfraktionen) und
Lichtfraktionen (faserförmige Materialien).

Letztere besteht aus organischen kompostier- bzw. brennbaren Bestandteilen wie Papier, Holz, Textilien, Pflanzen usw., vermischt mit flugfähigen Teilen aus Kunststoff, insbesondere Kunststoffolien.

Kunststoff ist einerseits ein störender Werkstoff bei der Weiterverarbeitung:
Bei der Kompostierung, weil der hauptsächlich vorhandene Kunststoff nicht verrottet.
Bei der Verbrennung, weil Kunststoff-Schwermetalle und Chloride freisetzen.
Bei der Herstellung von Presslingen, die unter Druck hergestellt werden, weil insbesondere beim Vorhandensein von Kunststoffolien die Festigkeit der Presslinge beeinträchtigt wird.

Andererseits ist Kunststoff ein Werkstoff, der der Wiederverwendung zugeführt werden kann, insbesondere wenn es sich um Thermoplaste handelt wie Polyethylen.

Es ist schon ein Trennverfahren bekanntgeworden, bei dem Kunststoff und Papier mit Hilfe von Wasser getrennt werden, mit dem die zu trennende Menge solange besprüht wird, bis die saugfähigen Papierfasern bzw. -teile gesättigt sind und ein höheres Raumgewicht aufweisen als die Kunststoffteile, insbesondere Kunststoffolien. Anschließend werden die Teile in einem Windkanal voneinander getrennt. Nach der Trennung müssen die Fraktionen getrocknet werden. Dieses Verfahren weist folgende Nachteile auf:
Aufgrund der Befeuchtung mit Wasser haften (kleben) die Teile oft aneinander fest, wodurch eine Trennung verhindert wird.
Hoher Wasserverbrauch.
Es fällt verschmutztes Wasser an, das zu reinigen ist.
Es fällt Schlamm an, der zu beseitigen ist.
Verhältnismäßig hoher Energieverbrauch.

Es ist auch schon bekanntgeworden, Kunststoffteile nach optischer Überprüfung von Hand aus Müll zu entfernen, der als Materialstrom zugeführt wird. Dieses Verfahren ist sehr zeitraubend sowie lohnintensiv und um so schwieriger durchzuführen, je kleiner die Kunststoffteile sind.

Ein Verfahren und eine Vorrichtung der eingangs angegebenen Arten sind in der DE-A 32 27 874 beschrieben. Bei diesem gattungsgemäße Stand der Technik wird der zu Schnitzeln zerkleinerte Materialstrom vorzugsweise auf eine Temperatur von 60°C gebracht und bei dieser Temperatur durch lebhafte Bewegung, beispielsweise in einem Fließbett, triboelektrisch aufgeladen. Es hat sich herausgestellt, daß sich hierbei das Papier negativ und der Kunststoff positiv aufladen. Das so vorbehandelte Material wird durch eine Aufgabevorrichtung als Materialstrom in einen Freifallscheider eingeführt. In einem elektrischen Feld, das zwischen zwei Elektroden des Freifallscheiders aufrechterhalten wird, werden die positiv geladenen Teilchen des Materialstromes in Richtung negativ geladener Elektrode und die negativ geladenen Teilchen des Materialstromes in Richtung positiver Elektrode abgelenkt und am Fuß des Freifallscheiders getrennt aufgefangen. Diese bekannten Maßnahmen sind nicht nur verfahrenstechnisch und vorrichtungstechnisch aufwendig, sondern es bildet sich auch ein dichter Belag aus den getrennten Teilen auf den Elektroden, dessen Entfernung problematisch ist.

In der DE-B 12 29 022 ist ein elektrischer Scheider zur Trennung von Schüttgütern nach der Korngröße und der stofflichen Zusammensetzung beschrieben. Bei diesem bekannten Scheider wird der Materialstrom mittels einer Zuführungsvorrichtung einer Fluidisierungskammer zugeführt, die unterseitig von einer luftdurchlässigen Trennwand begrenzt wird, durch die hindurch Druckluft von unten in die Fluidisierungskammer eingeblasen wird. Die Trennwand ist Teil eines die Fluidisierungskammer umgebenden Gehäuses, das im Betrieb des Scheiders in Vibration versetzt wird. Unter der Wirkung der Vibration und der zugeleiteten Druckluft zerlegt sich der Materialstrom in Schichten mit verschiedener Korngröße, wie dies bei bekannten, nach dem Wirbelschichtverfahren arbeitenden Scheidern geschieht. Die nach der Größe unterschiedlichen, jedoch verhältnismäßig größeren Körner werden in Rinnen von Bunkern abgefangen und in einem Sammelbehälter gesammelt. Die feineren Körner verlagern sich in die obere Zone der fluidisierten Schicht. Oberhalb dieser Schicht sind zwei Elektroden übereinander angeordnet. Die obere Elektrode ist durch ein umlaufendes Band gebildet, dessen Ober- und Untertrum sich horizontal und somit im wesentlichen rechtwinklig zur Hauptströmungsrichtung der Druckluft erstrecken. Unter der Wirkung des durch die Sprühentladung zwischen den Elektroden erregten elektrischen Feldes laden sich die feinen Körner auf. Sie passieren die untere geladene Elektrode, schlagen sich am Untertrum der oberen Elektrode nieder und werden durch das umlaufende Band ausgetragen und außerhalb der Fluidisierungskammer durch einen Abstreifer vom Untertrum abgestreift und in einem Sammelbehälter gesammelt.

Bei diesem bekannten Scheider wird die elektrostatische Anziehung der feinen Körner dadurch beeinträchtigt, daß die Körner sich in einer oberen Schicht befinden und somit sich gegenseitig daran hindern, elektrostatisch angezogen zu werden. Außerdem steht für die elektrostatische Anziehung der feinen Körner nur eine geringe Zeitspanne zur Verfügung. Ein weiterer Nachteil besteht darin, daß die Luftströmung das Band unter Änderung seiner Strömungsrichtung umströmen muß. Hierdurch entstehen Strömungswirbel, die die elektrostatische Anziehung und Abscheidung ebenfalls beeinträchtigen.

Der Erfindung liegt die Aufgabe zugrunde, ein Verfahren und eine Vorrichtung der eingangs angegebenen Arten so weiterzubilden, daß Teile aus nichtleitendem Material in einfacher und kostengünstiger Weise wirksam entfernt werden können.

Diese Aufgabe wird durch die Merkmale der Ansprüche 1 bzw. 7 gelöst.

Die Erfindung geht von der Erkenntnis aus, daß nichtleitende Materialien, insbesondere Kunststoff, elektrostatisch aufladbar sind und sie macht sich die aufgrund der elektrostatischen Aufladung der Teile und der entgegengesetzten elektrostatischen Ladung eines Empfängers vorhandene Anziehungskraft zunutze, um die Teile aus nichtleitendem Material aus dem Materialstrom herauszuziehen, und zwar vorzugsweise quer zum Materialstrom. Die Wirksamkeit der Trennkräfte ist verhältnismäßig groß, weil die zu trennenden Teile im schwebenden Zustand diesen Trennkräften weniger Widerstandskraft entgegensetzen und deshalb leichter aus dem Materialstrom herauszuziehen sind. Durch die Erfindung läßt sich der Müll in der gewünschten Weise leicht und dabei mit geringem Energieaufwand kontinuierlich und kostengünstig fraktionieren. Das erfindungsgemäße Verfahren eignet sich insbesondere für Kleinteile, die mit verhältnismäßig geringen Kräften aus dem Materialstrom herausgezogen werden können.

Die elektrostatische Ladung der Teile aus nichtleitendem Material läßt sich durch Reibung bzw. Reibung und Trennung der aufzuladenden Teile aneinander und/oder am sie aufnehmenden Träger erzeugen. Die Reibung kann in vorteilhafter Weise durch das Zuführen des Mülls in einer Vibrations- bzw. Schüttelrinne hervorgerufen werden.

Der schwebende Zustand wird in einfacher Weise durch die Hindurchführung des Materialstromes durch eine Flugstrecke erreicht, in der die Erdanziehung auf die Teile und damit auch die gegenseitige Belastung der Teile weitgehend aufgehoben wird. Hierzu eignet sich das Durchführen des Materialstromes durch einen Luftstrom der aufwärts gerichtet ist und so stark sein kann, daß die Teile nicht nur in einen schwebenden Zustand versetzt werden, sondern daß die Teile auch durch den Luftstrom mitgenommen werden können, das heißt, der Luftstrom kann die Förderung des Materialstromes zumindest teilweise übernehmen.

Das erfindungsgemäße Verfahren eignet sich insbesondere für einen solchen Müll-Materialstrom, der schon durch eine trennende Vorbehandlung aufbereitet ist, zum Beispiel durch Trennung in eine leichte und eine schwere Fraktion oder eine leichte, eine mittlere und eine schwere Fraktion, wobei die Eignung insbesondere für die leichte und/oder mittlere Fraktion gegeben ist, weil sich die Leichtteile durch das erfindungsgemäße Verfahren effektiver aus dem Materialstrom heraustrennen lassen.

Die Vorrichtung gemäß Anspruch 7 ermöglicht das Trennen und auch die Durchführung des erfindungsgemäßen Verfahrens mit einfachen und praktischen Mitteln, die bei einfacher Funktion gute Trennergebnisse ermöglichen. Wie schon beim erfindungsgemäßen Verfahren baut auch die erfindungsgemäße Ausgestaltung auf der Erkenntnis auf, daß sich die Müllteile aus nichtleitendem Material elektrostatisch aufladen lassen und aufgrund dieser Ladung durch einen Empfänger entgegengesetzter Ladung aus dem Materialstrom herausziehen lassen.

In den Unteransprüchen sind vorteilhafte Weiterbildungen der erfindungsgemäßen Ausgestaltung enthalten.

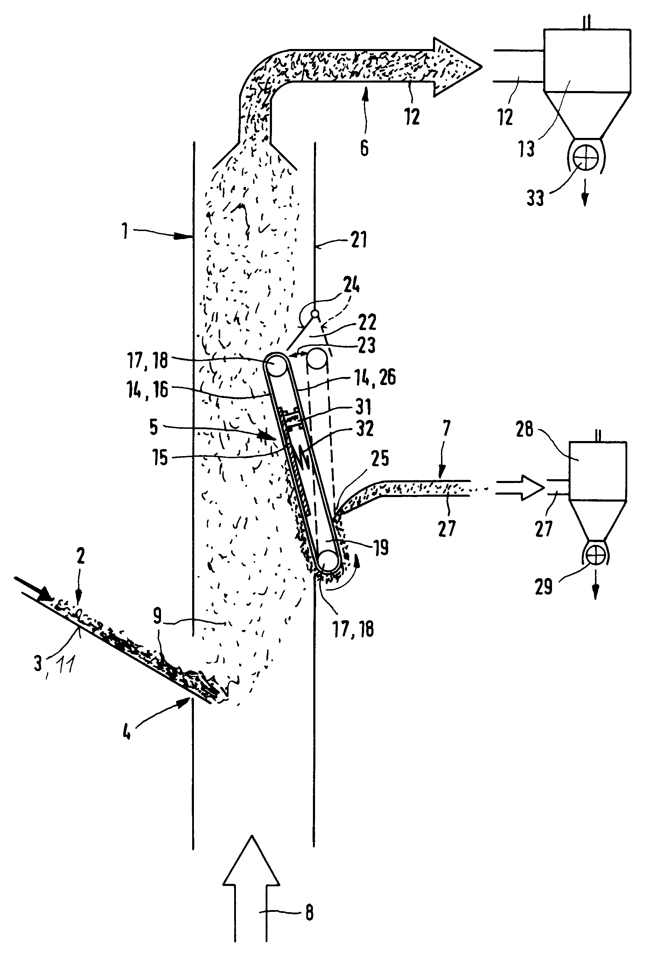

Nachfolgend wird die Erfindung anhand eines in einer vereinfachten Zeichnung dargestellten bevorzugten Ausführungsbeispiels näher erläutert. Die Zeichnung zeigt im vertikalen Schnitt eine erfindungsgemäß ausgestaltete Vorrichtung zum Trennen von Teilen aus elektrisch nichtleitendem Material, insbesondere Kunststoff und/oder Papier aus Müll.

Die wesentlichen Teile der Vorrichtung sind ein sich senkrecht erstreckender Schacht 1, z.B. ein Rohr runden oder rechteckigen bzw. quadratischen Querschnitts, eine Zuführungsvorrichtung 2 für Müll in Form einer schrägen Rinne 3, die bei 4 im unteren Bereich des Schachtes 1 im Bereich einer Öffnung indiesen mündet, eine oberhalb der Mündung 4 angeordnete Empfängervorrichtung 5 für Teile aus elektrisch nichtleitendem Material des Mülls, zwei Abführungsvorrichtungen 6, 7 für Müllteile, von denen die erste im oberen Bereich des Schachtes 1 angeordnet ist und die zweite der Empfängervorrichtung 5 zugeordnet ist, und ein nicht dargestelltes Gebläse, das im Schacht 1 einen aufwärts gerichteten Luftstrom erzeugt, der durch den Pfeil 8 verdeutlicht ist.

Die Zuführungsvorrichtung 2 wird durch eine Vibrations- oder Schüttelrinne gebildet, die im Betrieb der Vorrichtung ihre Schwingungen auf den in der Rinne 3 zum Schacht 1 gelangenden Materialstrom 9 überträgt, wodurch sich die Teile des Materialstroms sowohl gegenseitig als auch gegen die Rinne 3 reiben und deshalb die Teile aus elektrisch nichtleitendem Material, insbesondere die Kunststoffteile eine bestimmte elektrostatische Aufladung erhalten. Die Rinne 3 bildet somit nicht nur eine Zuführungsvorrichtung, sondern auch eine Einrichtung 11 zum elektrostatischen Aufladen der im Materialstrom 9 enthaltenden Teile aus elektrisch nichtleitendem Material. Die erste Abführungsvorrichtung 6 wird durch ein vom Schacht 1 an dessen oberen Ende ausgehendes Rohr 12 gebildet, das zu einem Abscheider 13 wie einem Zyklon führt.

Die Empfängervorrichtung 5 wird durch ein umlaufendes, beim vorliegenden Ausführungsbeispiel in Längsrichtung des Schachtes 1 umlaufendes Band 14, vorzugsweise aus Kunststoff gebildet, das während seines Umlaufs an einem plattenförmigen Reibstück 15 vorzugsweise aus Kupfer, reibt. Dabei läuft das mitnehmende Trum 16 des Bandes 14 vorzugsweise dem Luftstrom 8 entgegen. Das Reibstück 15 ist vorzugsweise zwischen den Trumen des Bandes 14 angeordnet, nämlich an der dem Materialstrom 9 abgewandten Seite des dem Materialstrom zugewandten Trums 16. Das Band 14 läuft um zwei um quer zur Schachtachse verlaufende Drehachsen 17 drehbare Rollen 18 um, die in einem im einzelnen nicht dargestellten Rahmen 19 gelagert sind. Der Antrieb ist aus Vereinfachungsgründen nicht dargestellt. Die Empfängervorrichtung 5 durchgreift die Wand 21 des Schachtes 1 in einer Wandöffnung 22, und sie ist quer zur Schachtachse 1 verstellbar und in der jeweiligen Position feststellbar angeordnet.

Beim vorliegenden Ausführungsbeispiel ist die Empfängervorrichtung 5 um ihr unteres Ende, z.B. um die untere Drehachse 17, schwenkbar und in der jeweiligen Schwenkposition feststellbar angeordnet, wobei sie in einer bevorzugten Stellung schräg aufwärts in den Schachtquerschnitt hineinragt. Eine zweite Stellung der Empfängervorrichtung 5, in der sie sich etwa parallel zur Wand 21 des Schachtes erstreckt bzw. nur geringfügig in den Schacht hineinragt, ist andeutungsweise dargestellt. Der Verstellbereich ist durch den Doppelpfeil 23 verdeutlicht. Zwecks Abdichtung des seine Lage gegenüber der Wand 21 verändernden oberen Endes der Empfängervorrichtung 5 ist eine an der oberen Begrenzung der Wandöffnung 22 schwenkbar gelagerte Schwenkklappe 24 angeordnet. Weitere Dichtungselemente zur Abdichtung der Empfängervorrichtung 5 in der Wandöffnung 22 sind aus Vereinfachungsgründen nicht dargestellt.

Außerhalb des Schachtes 1 ist dem Band 14 ein Abstreifer 25 zugeordnet, der mit einer Abstreifkante mit der Außenseite des Bandes 14 zusammenwirkt. Der Abstreifer 25 ist beim vorliegenden Ausführungsbeispiel auf der Außenseite des äußeren Trums 26 angeordnet. An den Abstreifer 25 schließt sich ein die zweite Abführungsvorrichtung 7 bildendes Rohr 27 an, das zu einem zweiten Abscheider 28 wie ein Zyklon führt.

Im folgenden wird die Funktion der Vorrichtung zum Trennen beschrieben.

Aufbereiteter Müll, d.h. falls notwendig, zerkleinerter, getrockneter und aufgelockerter bzw. homogenisierter Müll wird über die Zuführungsvorrichtung 2 dem Schacht 1 zugeführt. Die Trockenheit des Mülls bzw. der Müllteile ist deshalb von Bedeutung, weil zumindest die Oberflächen trocken sein sollen, da andernfalls eine Oberflächehaftung zwischen zu trennenden Teilen stattfinden kann. Die Stückgröße der Müllteile soll vorzugsweise kleiner als 2 x 2 cm Kantenlänge sein.

Die vorbeschriebene Aufbereitung des Mülls erfolgt vorzugsweise nach dem DE-Patent 31 05 597.

Während der Zuführung des Materialstroms 9 in der Zuführungsvorrichtung 2 entsteht durch die Bewegung des Materials aufgrund der Hin- und Herbewegung der Rinne 3 eine Reibungsspannung, die eine elektrostatische Aufladung insbesondere der Kunststoffteile bewirkt. An der Mündung 4 der Rinne 3 gelangt der Materialstrom 9 in den Schacht 1, wobei eine flockenförmige, faserförmige und/oder blattförmige Leichtfraktion aus Fasern, Papier und Kunststoff, insbesondere Kunststoffolien aufgrund des aufwärts gerichteten Luftstroms 8 hochschweben, während eine Fraktion aus Schwerstoffen im Schacht 1 nach unten fällt. Die Geschwindigkeit des Luftstromes 8 ist entsprechend anzupassen und zwar möglichst derart, daß die Geschwindigkeit bzw. die Bewegung der hochschwebenden Leichtfraktion gering ist. Durch den aufwärts gerichteten Luftstrom 8 wird die Leichtfraktion aufgelockert und sie gelangt in den Bereich der Empfängervorrichtung 5, die einen Spannungssektor mit einer elektrostatischen Ladung darstellt, die zum einen der Polarität der Ladung der Kunststoffteile entgegengesetzt ist, und die zum anderen aufgrund der unter diesen Voraussetzungen wirksamen elektrostatischen Kraft die Kunststoffteile aus dem Materialstrom 9 herauszieht, wobei die Kunststoffteile am Empfängerteil, hier dem Band 14, haften und zur zweiten Abführungsvorrichtung 7 transportiert werden. Beim vorliegenden Ausführungsbeispiel werden die Kunststoffteile, bei denen es sich insbesondere um Kunststoffolienstücke handelt, mittels des Abstreifers 25 vom Band 14 abgestreift und in das Rohr 27 eingeführt. Im Abscheider 28 wird die Kunststoffraktion abgeschieden, ggf. gesammelt und mittels einer Zuteilvorrichtung 29 den für sie bestimmten Verwendungszwecken zugeführt.

Die elektrostatische Aufladung des durch die Empfängervorrichtung 5 gebildeten Spannungssektors läßt sich vorzugsweise verändern, was beim vorliegenden Ausführungsbeispiel durch eine Stell- oder Spannvorrichtung 31 eingestellt werden kann, mittels der der Druck zwischen dem Reibstück 15, das vorzugsweise durch eine Platte gebildet ist, und dem Band 14 veränderlich ist. Diesen Zweck kann die Spannvorrichtung 31 und/oder auch eine Feder 32 bewirken, die das Reibstück 15 gegen das Band 14 beaufschlagt.

Die Leichtfraktion, insbesondere aus Papier, Flocken und Fasern, deren Teile nicht oder weniger stark elektrostatisch aufgeladen sind und deshalb von der Empfängervorrichtung 5 nicht angezogen werden, gelangt mit dem Luftstrom 8 in den Abscheider 13, in dem sie aus dem Luftstrom abgeschieden, ggf. gesammelt und mittels einer zweiten Zuteilvorrichtung 33 den für sie bestimmten Verwendungszwecken zugeführt werden kann.

Im Rahmen der Erfindung ist es möglich, mehrere Empfänger in Strömungsrichtung des Luftstromes 8 hintereinander anzuordnen, wodurch eine effektive Trennung der auszuscheidenden Teile oder eine Trennung von Teilen unterschiedlicher Werkstoffe (z.B. Kunststoff und Papier) aufgrund unterschiedlich starker elektrostatischer Kräfte möglich ist.

## Patentansprüche

1. Verfahren zum Trennen von Teilen aus elektrisch nichtleitendem Material, insbesondere Kunststoff und/oder Papier, aus Müll, bei dem der Müll vor dem Trennen gegebenenfalls durch Zerkleinerung, Wasserentzug und/oder Auflockerung aufbereitet und als heterogener Materialstrom (9) begrenzter Korngröße an einer ersten Station einer die Teile aus nichtleitendem Material elektrostatisch aufladenden Behandlung unterzogen wird, wobei an einer nachfolgenden zweiten Station die elektrostatisch geladenen Teile nach einer Flugstrecke in einem aufrechten Schacht (1) im frei schwebenden Zustand des Materialstromes (9) der elektrostatischen Anziehungskraft eines Empfängers (5) entgegengesetzter Ladung ausgesetzt und gesammelt werden, **dadurch gekennzeichnet,** daß der Materialstrom (9) im schwebenden Zustand der Wirkung eines nach oben gerichteten aktiven Luftstromes ausgesetzt wird, daß der Materialstrom (9) im Schacht (1) durch den Luftstrom (8) aufwärts entlang der ihm seitlich zugewandten, elektrostatisch wirksamen Fläche des Empfängers (5) bewegt wird und die vom Empfänger (5) nicht angezogenen Teile des Materialstromes (9) durch den Luftstrom (8) nach oben weitergefördert und kontinuierlich aus dem Schacht (1) abgeführt werden.

2. Verfahren nach einem der vorherigen Ansprüche, **dadurch gekennzeichnet**, daß die vom Empfänger (5) angezogenen Teile des Materialstromes (9) außerhalb des Schachtes (1) abgestreift werden.

3. Verfahren nach einem der vorherigen Ansprüche, **dadurch gekennzeichnet**, daß eine Schwerfraktion des Materialstromes (9) im Schacht (1) durch die Erdanziehung nach unten abgeführt wird.

4. Verfahren nach einem der vorherigen Ansprüche, **dadurch gekennzeichnet**, daß die elektrostatische Aufladung im Bereich der ersten Station durch Reibung der Materialteile aneinander und/oder an einem sie aufnehmenden Träger (3) erzeugt wird.

5. Verfahren nach einem der vorherigen Ansprüche, **dadurch gekennzeichnet**, daß der Materialstrom (9) einer Vibrations- oder Schüttelrinne (3) zugeführt wird.

6. Verfahren nach einem der vorherigen Ansprüche, **dadurch gekennzeichnet,** daß der Müll vor der elektrostatischen Aufladung in eine Leicht- und Schwerfraktion oder in eine Leicht-, Mittel- und Schwerfraktion fraktioniert wird und die Leichtfraktion und/oder Mittelfraktion der ersten Station zwecks elektrostatischer Aufladung sowie der zweiten Station zwecks elektrostatischer Trennung in derselben Vorrichtung oder in einer separaten Vorrichtung zugeführt werden.

7. Vorrichtung zur Durchführung des Verfahrens nach einem der vorhergehenden Ansprüche mit
- einer Zuführungsvorrichtung (2) für den Materialstrom (9),
- einem aufrechten Schacht (1), in den die Zuführungsvorrichtung (2) mündet,
- einer der Zuführungsvorrichtung (2) an einer ersten Station zugeordneten Einrichtung (11) zum elektrostatischen Aufladen der aufladbaren Teile des Materialstromes (9),
- und einem Empfänger (5) entgegengesetzter elektrostatischer Ladung zum Sammeln der elektrostatisch geladenen Teile,
- wobei zwischen der Zuführungsvorrichtung (2) und dem Wirkbereich des Empfängers (5) eine freie Flugstrecke für den Materialstrom (9) vorgesehen ist,
**dadurch gekennzeichnet,** daß dem Schacht (1) eine Einrichtung zum Erzeugen eines darin aufwärts gerichteten Luftstromes (8) zugeordnet ist, daß der Empfänger (5) durch ein umlaufendes Förderelement gebildet ist, das in den Schacht (1) hineinragt oder ihn seitlich begrenzt, und daß die dem Materialstrom (9) zugewandte Außenfläche des Förderelements aufrecht angeordnet ist.

8. Vorrichtung nach Anspruch 7, **dadurch gekennzeichnet,** daß das Förderelement ein Förderband (14) ist, das vorzugsweise quer zum Schacht (1) oder Materialstrom (9) verstellbar, insbesondere schwenkbar, ist.

9. Vorrichtung nach Anspruch 8, **dadurch gekennzeichnet,** daß das dem Materialstrom (9) zugewandte Trum (16) des Förderbandes (14) aufrecht verläuft.

10. Vorrichtung nach Anspruch 9, **dadurch gekennzeichnet,** daß das Förderband (14) um einen im Bereich seines unteren Endes angeordneten Schwenkpunkt schwenkbar ist.

11. Vorrichtung nach einem der vorherigen Ansprüche 7 bis 10, **dadurch gekennzeichnet,** daß dem Förderelement ein Reibelement (15) zugeordnet ist, an dem das Förderelement im Betrieb gleitet.

12. Vorrichtung nach einem der vorherigen Ansprüche 7 bis 11, **dadurch gekennzeichnet,** daß der Empfänger (5) oberhalb der Zuführungsvorrichtung (2) angeordnet ist.

13. Vorrichtung nach einem der vorherigen Ansprüche 7 bis 12, **dadurch gekennzeichnet,** daß die Einrichtung (11) zum elektrostatischen Aufladen durch eine Vibrations- oder Schüttelrinne (3) gebildet ist.

14. Vorrichtung nach einem der vorherigen Ansprüche 7 bis 13, **dadurch gekennzeichnet,** daß dem Förderelement des Empfängers (5) ein außerhalb des Schachtes (1) angeordneter Abstreifer (25) zugeordnet ist.

15. Vorrichtung nach einem der vorherigen Ansprüche 7 bis 14, **dadurch gekennzeichnet,** daß die Abführungsvorrichtung (7) des Empfängers (5) und/oder die Abführungsvorrichtung (6) für die vom Empfänger (5) nicht angezogenen Teile durch einen pneumatischen Förderer gebildet ist bzw. sind.

## Claims

1. Method for separating pieces of electrically non-conductive material, in particular plastics and/or paper, from refuse, in which, before separation, the refuse is prepared, if need be by size reduction, dehydration and/or breaking up, and, as a heterogenous stream (9) of material of limited particle size, is subjected at a first station to a treatment for electrostatic charging of the pieces of non-conductive material, wherein, at a subsequent second station, the electrostatically charged pieces, after flying a distance in an upright shaft (1), are exposed, in the free-floating state of the stream (9) of material, to the electrostatic force of attraction of a collector (5) of opposite charge and are collected, characterised in that the stream (9) of material in the free-floating state is exposed to the effect of an active airstream directed upwards, in that the stream (9) of material in the shaft (1) is moved upwards by the airstream (8) along the electrostatically active surface of the collector (5), which surface faces the side of the airstream (8), and the pieces of the stream (9) of material not attracted by the collector (5) are conveyed on upwards by the airstream (8) and continuously carried away out of the shaft (1).

2. Method according to one of the preceding claims, characterised in that the pieces of the stream (9) of material attracted by the collector (5) are stripped off outside the shaft (1).

3. Method according to one of the preceding claims, characterised in that a heavy fraction of the stream (9) of material in the shaft (1) is carried away downwards by gravity.

4. Method according to one of the preceding claims, characterised in that the electrostatic charging is produced in the region of the first station by friction of the pieces of material against each other and/or against a carrier (3) holding them.

5. Method according to one of the preceding claims, characterised in that the stream (9) of material is supplied to a vibrating or shaking chute (3).

6. Method according to one of the preceding claims, characterised in that, before electrostatic charging, the refuse is fractionated to form a light fraction and a heavy fraction, or a light fraction, a medium fraction and a heavy fraction, and the light fraction and/or medium fraction are supplied to the first station for the purpose of electrostatic charging and to the second station for the purpose of electrostatic separation in the same device or in a separate device.

7. Device for carrying out the method according to one of the preceding claims, having
- a device (2) for supplying the stream (9) of material,
- an upright shaft (1) into which the supply device (2) opens,
- a device (11) assigned to the supply device (2) at a first station for the electrostatic charging of the chargeable pieces of the stream (9) of material,
- and a collector (5) of opposite electrostatic charge for collecting the electrostatically charged pieces,
- wherein, between the supply device (2) and the effective region of the collector (5), there is provided a free flight distance for the stream (9) of material,
characterised in that a device for generating an airstream (8) directed upwards in the shaft (1) is assigned to the said shaft, in that the collector (5) is formed by a circulating conveyor element which projects into the shaft (1) or bounds it at the side, and in that the outer surface of the conveyor element facing the stream (9) of material is arranged upright.

8. Device according to claim 7, characterised in that the conveyor element is a conveyor belt (14) which can be moved preferably transversely relative to the shaft (1) or the stream (9) of material, in particular in a swivelling manner.

9. Device according to claim 8, characterised in that the side (16) of the conveyor belt (14) facing the stream (9) of material runs in an upright direction.

10. Device according to claim 9, characterised in that the conveyor belt (14) can be swivelled about a swivel point arranged in the region of its lower end.

11. Device according to one of preceding claims 7 to 10, characterised in that there is assigned to the conveyor element a friction element (15) against which the conveyor element slides during operation.

12. Device according to one of preceding claims 7 to 11, characterised in that the collector (5) is arranged above the supply device (2).

13. Device according to one of preceding claims 7 to 12, characterised in that the device (11) for electrostatic charging is formed by a vibrating or shaking chute (3).

14. Device according to one of preceding claims 7 to 13, characterised in that there is assigned to the conveyor element of the collector (5) a stripper (25) arranged outside the shaft (1).

15. Device according to one of preceding claims 7 to 14, characterised in that the carrying-away device (7) of the collector (5) and/or the carrying-away device (6) for the pieces not attracted by the collector (5) is or are formed by pneumatic conveying means.

## Revendications

1. Procédé de séparation de fractions d'une matière non conductrice de l'électricité, en particulier de matière plastique et/ou de papier provenant de déchets, dans lequel les déchets sont préparés avant la séparation, le cas échéant par broyage, déshydratation et/ou dispersion, et sont soumis, sous la forme d'un courant hétérogène de matière (9) de granulométrie limitée, dans une première station à un traitement donnant une charge électrostatique aux particules de matière non conductrice, tandis que dans une deuxième station en aval les particules dotées d'une charge électrostatique sont exposées, après un trajet volant dans un puits vertical (1) dans un état de flottement libre du courant de matière (9), à la force d'attraction électrostatique d'un collecteur (5) de polarité opposée, et sont recueillies,
**caractérisé** en ce que le courant de matière (9) à l'état flottant est exposé à l'action d'un courant d'air actif dirigé de bas en haut, en ce que le courant de matière (9) dans le puits (1) est entraîné par le courant d'air (8) vers le haut le long de la surface à activité électrostatique du collecteur (5) orientée latéralement vers ce courant (9) et en ce que les particules du courant de matière (9) non attirées par le collecteur (5) sont entraînées par le courant d'air (8) plus loin vers le haut et sont évacuées continuellement hors du puits (1).

2. Procédé selon la revendication 1, caractérisé en ce que les particules du courant de matière (9) attirées par le collecteur (5) sont évacuées par raclage à l'extérieur du puits (1).

3. Procédé selon une des revendications précédentes, caractérisé en ce qu'une fraction lourde du courant de matière (9) dans le puits (1) est évacuée par le bas sous l'effet de l'attraction terrestre.

4. Procédé selon une des revendications précédentes, caractérisé en ce que le chargement électrostatique est produit dans la zone de la première station par frottement des particules de matière entre elles et/ou sur un support (3) sur lequel elles sont reçues.

5. Procédé selon une des revendications précédentes, caractérisé en ce que le courant de matière (9) est amené dans un couloir vibrant ou à secousses (3).

6. Procédé selon une des revendications précédentes, caractérisé en ce que les déchets sont fractionnés, avant de recevoir une charge électrostatique, en une fraction légère et une fraction lourde, ou en une fraction légère, une fraction moyenne et une fraction lourde, et en ce que la fraction légère et/ou la fraction moyenne sont amenées à la première station pour y recevoir une charge électrostatique, ainsi qu'à la deuxième séparation dans le but de leur séparation électrostatique dans le même dispositif ou dans un dispositif séparé.

7. Dispositif de mise en oeuvre du procédé selon une des revendications précédentes, avec :
- un dispositif d'alimentation (2) pour le courant de matière (9),
- un puits vertical (1) dans lequel débouche le dispositif d'alimentation (2),
- un dispositif (11) associé au dispositif d'alimentation (2) dans une première station, pour donner une charge électrostatique aux particules du courant de matière (9) aptes à recevoir une telle charge,
- et un collecteur (5) de polarité opposée pour recueillir les particules porteuses d'une charge électrostatique,
- un trajet de vol libre étant prévu pour le courant de matière (9) entre le dispositif d'alimentation (2) et la zone d'action du collecteur (5),
**caractérisé** en ce qu'un dispositif pour produire dans le puits (1) un courant d'air ascendant (8) est associé audit puits (1), en ce que le collecteur (5) est constitué par un élément transporteur circulant en circuit fermé, qui est saillant dans le puits (1) ou qui le limite latéralement, et en ce que la surface extérieure de l'élément transporteur tournée vers le courant de matière (9) est disposée en position debout.

8. Dispositif selon la revendication 7, caractérisé en ce que l'élément transporteur est une courroie transporteuse (14) qui est de préférence réglable, en particulier de manière pivotante, transversalement au puits (1) ou au courant de matière (9).

9. Dispositif selon la revendication 8, caractérisé en ce que le brin (16) de la courroie transporteuse (14) orienté vers le courant de matière (9) s'étend dans un sens sensiblement vertical.

10. Dispositif selon la revendication 9, caractérisé en ce que la courroie transporteuse (14) est pivotante autour d'un pivot disposé dans la zone de son extrémité inférieure.

11. Dispositif selon une des revendications 7 à 10 précédentes, caractérisé en ce qu'un élément frotteur (15) est associé à l'élément transporteur, lequel glisse sur cet élément frotteur pendant le fonctionnement.

12. Dispositif selon une des revendications 7 à 11 précédentes, caractérisé en ce que le collecteur (5) est disposé au-dessus du dispositif d'alimentation (2).

13. Dispositif selon une des revendications 7 à 12 précédentes, caractérisé en ce que le dispositif (11) de charge électrostatique est constitué par un couloir vibrant ou à secousses (3).

14. Dispositif selon une des revendications 7 à 13 précédentes, caractérisé en ce qu'un racleur (25) disposé à l'extérieur du puits (1) est associé à l'élément transporteur du collecteur (5).

15. Dispositif selon une des revendications 7 à 14 précédentes, caractérisé en ce que le dispositif d'évacuation (7) du collecteur (5) et/ou le dispositif d'évacuation (6) des particules non attirées par le collecteur (5) est ou sont constitué(s) par un ou des transporteurs pneumatiques.
